# FASCICULE DE BREVET EUROPEEN

(11) **EP 4 508 341 B1**
(45) Date de publication et mention de la délivrance du brevet: **13.05.2026**
(21) Numéro de dépôt: 23723824.1
(22) Date de dépôt: 14.04.2023
(51) Int. Cl.: F16C 17/02, F16C 23/04, F16C 27/02, F16C 33/24, F16C 33/10, F16C 27/06, F16C 33/20

(54) **PALIER DE ROTATION ENTRE UN ORGANE ROTATIF ET UN ARBRE DE BOITE DE VITESSES**
DREHLAGER ZUR POSITIONIERUNG ZWISCHEN EINEM DREHELEMENT UND EINER GETRIEBEWELLE
ROTARY BEARING INTENDED TO BE POSITIONED BETWEEN A ROTARY MEMBER AND A GEARBOX SHAFT

(30) Priorité: 14.04.2022 FR 2203498
(43) Date de publication de la demande: 19.02.2025
(73) Titulaire: VALEO EMBRAYAGES, 80009 Amiens (FR)
(72) Inventeur: PANIAGUA, Adrian, 28947 FUENLABRADA (ES); NOULLET, Alexandre, 28947 FUENLABRADA (ES)
(74) Mandataire: Valeo Powertrain Systems
(86) Numéro de dépôt international: PCT/EP2023/059842
(87) Numéro de publication internationale: WO 2023/198924

(56) Documents cités:
- US-A1- 2003 012 467

## Description

L'invention concerne le domaine des paliers de rotations destinés à être assemblés entre une boîte de vitesses et un moteur à combustion interne équipant un engin de mobilité, et notamment un volant d'inertie. Elle concerne aussi une méthode pour assembler un tel palier de rotation.

Dans les groupes motopropulseurs utilisant un moteur à combustion interne et une boîte de vitesses, un arbre primaire de la boîte de vitesses coopère avec un vilebrequin du moteur à combustion interne, notamment pour aligner le long d'un même axe ces deux composants. Le moteur à combustion interne et la boite de vitesses présentent des phases où leurs vitesses de rotation respectives sont différentes, par exemple lorsque le conducteur embraye pour changer un rapport ou lorsqu'un système de commande de vitesses sollicite la boîte de vitesses pour passer d'un rapport à un autre. A cette fin, il est connu d'équiper ce groupe motopropulseur d'un palier de rotation qui d'une part, centre l'arbre primaire de la boite de vitesses sur le vilebrequin du moteur à combustion interne et d'autre part, autorise un différentiel de rotation entre ces deux composants.

Il existe actuellement divers types de "Paliers" apportant cette fonction de pilotage de l'arbre primaire de la boîte de vitesses. Le palier de rotation peut être un roulement de type "pilote" composé soit, de multiples éléments roulant, tel qu'un roulement à aiguilles ou un roulement à billes, étanche ou non. Soit d'une bague monobloc, communément appelée palier lisse et réalisée dans un matériau auto-lubrifié tel que le bronze ou le cuivre.

Les paliers de rotations, types roulement "pilote" présentent des inconvénients : ils sont complexes et chers dans leur réalisation car ils impliquent l'usage d'un grand nombre de pièces, avec l'apport obligatoire d'une lubrification additionnelle. Leur durabilité dépend principalement de la présence de cette lubrification additionnelle tout au long de la vie utile du produit. La robustesse de ce type de palier a roulement est lié à sa capacité à éviter la perte du lubrifiant ou graisse, rendant sa conception complexe, car adaptée et ajustée aux caractéristiques de la lubrification choisie (réservoir de Graisse ou lubrifiant) et à son environnement (conditions d'utilisation).

Les paliers de rotation à roulement requièrent l'usage d'une bague d'étanchéité en contact avec l'arbre primaire, afin d'assurer l'absence de fuite du lubrifiant pouvant contaminer l'ensemble du bloc motopropulseur. La fiabilité de ce roulement est également assujettie à une manipulation minutieuse lors de son installation, la maintenance ou la réparation du groupe motopropulseur. L'endommagement prématuré de ce roulement est source de nuisance sonore du groupe motopropulseur ainsi que de dégradations des fonctions et performances de ce dernier. La réparation et le remplacement de ce type de roulement sont sources de coûts supplémentaires.

Quand ces paliers sont avantageusement du type monobloc, les risques de manipulations précédemment indiqués, ainsi que le risque de détérioration prématurée sont considérablement réduits, toutefois l'usage d'une bague monobloc a pour conséquence la réduction des performances et caractéristiques fonctionnelles de la fonction pilotage de l'arbre primaire, ce qui en réduit significativement leur usage.

Ces paliers lisses de rotation types monobloc connus et actuellement présents sur le marché présentent des limitations techniques concernant l'absorption du désalignement Moteur-Boite de Vitesse en plus d'un coefficient de friction parfois trop important, qu'il convient de réduire.

Le document US 2003/012467 A1 divulgue un palier de rotation avec une section conique à la bague intérieure.

Cette recherche de performances, dans la fonction d'absorption du désalignement de l'arbre, dans le contrôle de la friction et l'usage de nombre limité de pièces, est à la base de l'invention.

L'invention cherche à réunir en une unique solution les avantages de ces deux technologies de palier de rotations (Palier auto lubrifié et Roulement), en proposant un palier de rotation au design simpliste et au nombre de bagues limitées. L'invention a aussi pour but de résoudre l'ensemble des inconvénients précédemment cités, en apportant une solution simple, efficace et économique.

L'invention propose un palier de rotation destiné à être placé entre un organe rotatif d'un moteur et un arbre primaire d'une boîte de vitesses, le palier de rotation étant constitué d'au moins deux bagues cylindriques, d'axe X, étant en contact entre elles parmi lesquelles : une bague intérieure adaptée à être montée serrée ou glissante sur l'arbre primaire, et une bague extérieure adaptée à être montée serrée dans l'organe rotatif, lesdites bagues cylindriques étant configurées pour aligner l'arbre primaire avec l'organe rotatif, au moyen d'au moins une bague configurée pour réaliser un degré de liberté et d'au moins une bague réalisée en un matériau synthétique ou composite favorisant le glissement.

L'invention propose un palier de rotation destiné à être placé entre un organe rotatif d'un moteur et un arbre primaire d'une boîte de vitesses, le palier de rotation étant constitué d'au moins deux bagues cylindriques, d'axe X, étant en contact entre elles parmi lesquelles : une bague intérieure adaptée à être montée serrée ou glissante sur l'arbre primaire, et une bague extérieure adaptée à être montée serrée dans l'organe rotatif, le palier de rotation comprenant au moins une troisième bague logée au moins en partie dans la bague extérieure, l'au moins une troisième bague formant une bague de guidage configurée pour l'entrée de l'arbre primaire dans le palier de rotation, lesdites bagues cylindriques étant configurées pour aligner l'arbre primaire avec l'organe rotatif, au moyen d'au moins une bague configurée pour réaliser un degré de liberté et d'au moins une bague réalisée en un matériau synthétique ou composite favorisant le glissement,

De par l'apport d'un degré de liberté additionnel d'une bague, on s'assure d'aligner sur un même axe l'arbre primaire avec l'organe rotatif. On absorbe les possibles défauts de coaxialité au niveau du palier, les besoins en roulement de l'arbre primaire avec l'organe rotatif étant améliorés. Ce degré de liberté additionnel autorise par exemple un mouvement de ladite bague selon une direction transversale (axiale), horizontale (radiale) et/ou angulaire, en étant monté avec une autre bague ou l'arbre primaire. Ceci découle du fait que cette bague est ménagée afin d'autoriser un degré de liberté unique, de par sa forme et/ou son matériau, avec l'arbre primaire ou une autre bague depuis lequel ou laquelle elle est montée en contact.

Ainsi ledit degré de liberté additionnel peut être accru, grâce à au moins une bague comprenant le matériau synthétique ou composite prévue dans la conception du palier de rotation.

On autorise également une dissociation de la vitesse de rotation de l'organe rotatif par rapport à la vitesse de rotation de l'arbre primaire, lorsque cela est nécessaire, grâce à une bague ayant un matériau synthétique ou composite et dont une surface de glissement est prévue à cet effet. Autrement dit, au moins une bague en synthétique ou composite est configurée pour présenter un coefficient de frottement limité, grâce au fait que ladite bague est réalisée en un matériau synthétique ou composite favorisant le glissement.

Selon une caractéristique supplémentaire de l'invention, le coefficient de frottement limité est inférieur à 0,2, notamment inférieur à 0,1.

Le couple de traînée résultant du palier de rotation selon l'invention est alors significativement inférieur au couple de traînée résultant des paliers de l'art antérieur.

Les bagues cylindriques du palier de rotation peuvent être des portions de cylindre d'axe de révolution de rayon constant;
Selon une caractéristique supplémentaire de l'invention, l'au moins une troisième bague comporte un chanfrein ou une forme sensiblement conique. Cette forme permet d'améliorer le guidage de l'arbre lors de l'assemblage sur l'organe rotatif.

Un tel palier de rotation peut présenter l'une ou l'autre des caractéristiques décrites ci-dessous, combinées entre elles ou prises indépendamment les unes des autres :
- Avantageusement, une bague du palier de rotation de préférence la bague intérieure, peut être à la fois configurée pour réaliser au moins un degré de liberté avec une autre bague ou avec l'arbre primaire, et être en un matériau synthétique ou composite.
- Dans une telle situation, d'autres bagues du palier de rotation peuvent être également en un matériau synthétique, réalisant en particulier d'autres fonctions qui leur sont propre ;
- Ledit matériau composite favorisant le glissement peut être constitué d'au moins deux matériaux de nature différente, par exemple en PTFE (ou téflon), en bronze fritté, laiton, etc... ;
- Ledit matériau synthétique favorisant le glissement peut être un polymère, par exemple en plastique, qui est susceptible d'être moulé ou façonné, en général à chaud et sous pression. On évite toute opération de retrait de matières réalisant ladite bague ;
   Selon une caractéristique supplémentaire de l'invention, la bague réalisée en un matériau synthétique ou composite favorisant le glissement est montée en contact avec l'arbre primaire ou une autre bague.
- Selon un mode de réalisation particulier de l'invention, la bague intérieure comprend une région de glissement (dite surface glissante) avec l'arbre primaire ou avec une autre bague du palier de rotation. On réalise ainsi un degré de liberté axial (notamment transversal) entre ces derniers ;
- Cette bague intérieure peut être configurée pour réaliser une liaison coulissante avec l'arbre primaire ou la bague extérieure, au moyen de la région de glissement ;
- Cette région de glissement peut être formée sur une face externe de la bague intérieure pour être configurée pour être glissante au contact d'une autre bague, en particulier la bague extérieure ;
- Alternativement ou en complément, cette région de glissement peut être formée sur une face interne de la bague intérieure pour être configurée pour être glissante au contact de l'arbre primaire ;
- Selon un mode de réalisation particulier de l'invention, la bague intérieure du palier de rotation peut présenter un corps auto-lubrifié, qui intègre du lubrifiant dans son matériau ou sa couche antifriction. Un matériau autolubrifié de la bague intérieure est par exemple synthétique ou composite. Aucun entretien n'est nécessaire. Le lubrifiant est uniformément réparti à la surface de la bague, réduisant les frottements, quand bien même sa couche antifriction commence à s'user ;
- Selon une autre caractéristique de l'invention, le nombre de bagues cylindriques du palier de rotation est inférieur ou égal à quatre, par exemple égale à deux ou à trois. En utilisant un nombre limité de bagues, on améliore les performances du palier par rapport à ceux monoblocs ;
- Selon l'invention, le palier de rotation comprend au moins une bague additionnelle dit troisième bague, logée au moins en partie dans la bague extérieure ;
- L'au moins une bague additionnelle peut être réalisée par moulage.
- L'au moins une bague additionnelle peut être en synthétique et/ou composite. Ainsi conçue, cette bague peut présenter une surface flexible ou souple.

On entend par surface flexible une surface fléchissant et rigide, de préférence réalisée dans un matériau composite, notamment en polymère, par exemple en plastique ;
On entend par surface souple une surface élastiquement déformable, de préférence réalisée dans un matériau synthétique, notamment en polymère, par exemple en caoutchouc ;
- L'au moins une bague additionnelle peut être intercalée au moins en partie radialement entre les bagues intérieure et extérieure. Cette bague additionnelle peut former une bague intercalaire.
- Cette bague additionnelle peut être réalisée dans un matériau synthétique ou composite, notamment en polymère, par exemple en caoutchouc, ou encore tout autre polymère configuré pour être flexible ;
- Cette bague additionnelle peut former alors une bague d'amortissement. Ainsi disposée, cette bague est configurée pour amortir les efforts radiaux entre les bagues intérieure et extérieure ;
- L'au moins une bague additionnelle peut être disposée au moins en partie axialement d'un côté de la bague intérieure, en particulier du côté de la boite de vitesses. Ainsi disposée, elle est configurée pour faciliter l'entrée de l'arbre primaire à l'intérieur du palier de rotation ;
Cette bague de guidage, doit permettre le passage sans interférence, ni contact de l'arbre primaire, évitant ainsi tout frottement parasite.
- Cette bague additionnelle peut être réalisée dans un matériau synthétique, notamment en polymère, par exemple en plastique en particulier un plastique thermoformé, ou encore tout autre polymère configuré pour être souple ;
- Cette bague additionnelle forme alors une bague de guidage (dit de centrage l'arbre primaire) configurée pour faciliter l'entrée de l'arbre primaire dans le palier et en particulier dans la bague intérieure. Cette bague de guidage est de préférence de forme conique ;
- Cette bague de guidage comprend un alésage conique définissant une paroi de guidage (nommée aussi surface de contact) configurée pour centrer l'arbre primaire. Cette paroi de guidage peut être en section de forme biseautée ;
- Selon un mode de réalisation particulier de l'invention, la bague de guidage peut être exemptée de lubrifiant ou de graisse. L'absence de lubrifiants ou graisse, permet de simplifier cette bague de guidage, en supprimant sa fonction d'étanchéité, contrairement à l'art antérieur correspondant aux palier à roulements de type pilote avec lubrification ;
- Selon une autre caractéristique de l'invention, les bagues cylindriques du palier de rotation peuvent être différentes l'une de l'autre de par au moins : le matériau, l'épaisseur, la dureté, la forme et la longueur axiale. Ces différences sont décrites plus en détails par la suite ;
- La bague extérieure peut être en métal, notamment en une seule tôle métallique. La bague intérieure peut être en métal, en matériau synthétique ou composite, notamment en plastique ;
- La bague extérieure peut être composée en un matériau ayant une densité ou une dureté qui est élevée afin d'assurer son emmanchement dans l'organe rotatif, sans souffrir de déformation pouvant altérer son ajustement avec la bague intérieure. Le matériau de la bague extérieure est ainsi par exemple un matériau métallique, par exemple un acier traité ou un inox.
- La bague intérieure peut être également rigide, avec une densité et une dureté élevée afin de permettre une friction avec l'arbre primaire également traitée.
- L'épaisseur de la bague extérieure peut être limitée, pour garder un espace pour le diamètre intérieur du palier de rotation. L'épaisseur de la bague extérieure peut être limitée et fine.

L'épaisseur de la bague extérieure peut être inférieure à une épaisseur de la bague intérieure, en particulier inférieure à 1/3 fois l'épaisseur de la bague intérieure ;
L'épaisseur visée ici est la dimension mesurée le long d'une direction radiale de la bague concernée, entre une face intérieure ou interne et une face extérieure ou externe de ladite bague. On entend par face une surface plane en section ;
En particulier, l'épaisseur de la bague extérieure peut être inférieure à une épaisseur de la bague additionnelle, en particulier inférieure à 1/3 fois l'épaisseur de la bague additionnelle.

En particulier, la bague additionnelle peut être composée d'un ou plusieurs matériaux. Par exemple, un matériau résistant et rigide tel qu'un acier traité, recouvert d'un matériau synthétique ou composite, notamment en plastique, caoutchouc, élastomère ou tout autre polymère favorisant la flexion ou le glissement ;
En particulier, la bague intérieure peut présenter un diamètre extérieur qui est inférieure au diamètre intérieur de la bague extérieure. Alternativement, la bague intérieure présente un diamètre extérieur qui est supérieur au diamètre intérieur de la bague extérieure ;
- L'au moins une bague additionnelle peut être dans une forme monobloc ou bi-bloc, c'est-à-dire réalisée au sein d'un même moule et/ou d'un même matériau (par exemple avant d'être fendue) ;
Cette bague additionnelle monobloc ou bi-bloc forme peut être réalisée en un matériau synthétique, type élastomère;
- A titre d'exemple, la bague d'amortissement et la bague de guidage sont issues du même matériau, de préférence réalisées d'un seul tenant (même pièce). L'avantage d'une forme monobloc est de combiner différentes fonctions à lier entre elles.
- A titre d'exemple, la bague d'amortissement et la bague de guidage sont issues du même matériau, mais distincts, le matériau étant ensuite fendu en deux blocs. Par exemple réalisées en un même matériau synthétique, avant fendue radialement. L'avantage d'une forme bi-bloc est de distinguer par chaque bloc une fonction qui lui est propre.
- Alternativement, la bague additionnelle peut être bi-bloc avec deux matériaux différents, l'un des blocs en plastique et l'autre bloc en caoutchouc ou élastomère. Dans les deux cas, les blocs de la bague additionnelle sont distincts et rapprochés l'un de l'autre ;
- L'au moins une bague additionnelle peut comprendre un fond et en particulier une piste de guidage notamment circonférentiellement continue, depuis laquelle est reçue la bague intérieure ;
- L'au moins une bague additionnelle peut comprendre une paroi d'arrêt pour la fin de course de la première bague ; L'au moins une bague additionnelle logement apte à recevoir la bague intérieure.
- La bague intérieure peut être intégrée et solidaire de la bague additionnelle d'amortissement en son diamètre intérieur. Cette union peut résulter d'un processus de thermoformage ou d'injection plastique. Ainsi, la bague intérieure et la bague intermédiaire forment un ensemble monobloc qui peut inclure selon le mode de réalisation précédemment détaillé, la fonction de guidage en intégrant la bague additionnelle de guidage ;
- Selon une autre caractéristique de l'invention, la bague intérieure forme une bague lisse, notamment un coussinet de palier, qui est montée coulissant sur l'arbre primaire, et dont la surface de contact interne est plane. D'où un degré de liberté axial accrue ;
Ainsi conçue, le coefficient de frottement est réduit, la durée de vie des bagues est augmentée par report de l'usure sur la bague lisse. Le fonctionnement est silencieux.

L'épaisseur de cette bague lisse est inférieure à celle des autres bagues du palier de rotation. D'où un encombrement radial et un coût de matière réduits ;
- Selon une autre caractéristique de l'invention, la bague intérieure est configurée pour réaliser une liaison pivot avec l'arbre primaire ou avec la bague extérieure. Autrement dit configurée pour faire pivoter l'arbre primaire en appui sur celle-ci. Le défaut d'alignement est plus admissible ;
La bague intérieure comprend ainsi une région de pivotement, notamment une surface de contact bombée interne ou externe qui est montée avec l'arbre primaire ou avec la bague extérieure.

La bague intérieure forme alors une bague de pivotement ayant une surface de contact bombée
- interne qui est montée avec l'arbre primaire, ou
- externe qui est montée avec la bague extérieure.

Une surface de contact bombée est configurée pour une rotation relative autour d'un axe perpendiculaire à l'axe, l'amplitude (appelée angle de rotulage) étant faible pour l'arbre primaire ;
- Selon une autre caractéristique de l'invention, la bague intérieure est configurée pour réaliser une liaison rotule avec la bague extérieure. Autrement dit configurée pour faire pivoter la bague intérieure selon une amplitude (dit angle de rotulage) importante pour l'arbre primaire ;
La bague intérieure comprend ainsi une surface de contact sphérique externe qui est montée avec la bague extérieure. La bague intérieure forme alors une bague sphéroïdale dite rotule. Ainsi conçue, cette bague sphéroïdale est configurée pour augmenter l'angle de rotulage entre les bagues intérieure et extérieure, le roulement transmettant alors les efforts axiaux ;
- Selon une autre caractéristique de l'invention, la bague extérieure délimite un volume intérieur à l'intérieur duquel s'étend au moins une autre bague, de préférence la bague intérieure ou l'ensemble des autres bagues du palier de rotation ;
En particulier la bague extérieure forme une cage entourant au moins la bague intérieure, et notamment l'ensemble des autres bagues du palier de rotation ;
A titre d'exemple, la bague extérieure forme une cage flexible, dont la surface de contact externe est configurée pour réaliser un degré de liberté radial en particulier avec la bague intérieure ;
- Selon une autre caractéristique de l'invention, la bague extérieure comprend un bossage central configurée pour réaliser une surface de contact linéaire avec la bague intérieure ;
- Selon une autre caractéristique de l'invention, la bague extérieure comprend des moyens de blocage axial ou rotatif destinés à lier au moins une autre bague, et de préférence l'ensemble des autres bagues, à la bague extérieure. Les moyens de blocage peuvent être réalisés par une face terminale d'appui contre laquelle un bord de la bague intérieure vient en appui ;
- Selon une autre caractéristique de l'invention, la bague extérieure comprend des moyens de serrage destinés à être montés sur les bords ou tranches de la bague intérieure, notamment à l'intérieur d'encoches ménagées sur lesdites tranches de la bague intérieure ;
A titre d'exemple, par moyens de blocage axial: la bague extérieure et la bague intérieure peuvent être solidaires au moins axialement l'une par rapport à l'autre. Notamment, ces dernières peuvent être solidaires autant axialement qu'en rotation ;
A titre d'exemple, par moyens de blocage rotatif: la bague extérieure et la bague additionnelle peuvent être solidaires au moins en rotation l'une par rapport à l'autre. Notamment, ces dernières peuvent être solidaires autant axialement qu'en rotation ;
- Selon une autre caractéristique de l'invention, le palier de rotation est constitué d'une à trois bagues moulées, de préférence dans divers matériaux synthétique et/ou composite, par exemple en plastique(s) et élastique(s). A titre d'exemple, au moins l'une desdites bagues moulées, notamment dite intérieure ou additionnelle, peut être réalisée par injection dans la bague extérieure, le volume intérieur de cette dernière servant alors de moule.

L'invention couvre également un procédé pour fabriquer un palier de rotation, tel que décrit par le premier aspect de l'invention, destiné à être placé entre un organe rotatif d'entrée et un arbre primaire d'une boite de vitesses, comprenant au moins les étapes suivantes :
a) Réaliser par emboutissage ou estampage à partir d'une tôle métallique, au moins une bague dont une bague dite extérieure du palier de rotation. En particulier, ladite bague emboutie ou estampée présente au moins un volume intérieur et un fond, délimitant notamment une forme de cage ;
b) Réaliser par moulage à partir d'un matériau composite ou synthétique, au moins une bague dont une bague dite intérieure du palier de rotation, notamment en polymère ou en plastique.

En particulier, l'au moins une bague moulée présente une surface interne ou externe de glissement destinée à être logée dans le volume intérieur de la bague extérieure. De préférence, l'au moins une bague moulée est de forme complémentaire avec l'intérieur de la bague extérieure.

En particulier, le palier de rotation est constitué jusqu'à trois bagues moulées dans divers matériaux synthétique et/ou composite, par exemple en plastique(s) et élastique(s).

A titre d'exemple, une bague moulée peut être réalisée par injection dans la bague extérieure, le volume intérieur de cette dernière servant alors de moule.

Un tel procédé reprend tout ou partie des caractéristiques mentionnées précédemment.

L'invention couvre également un procédé pour assembler un palier de rotation, tel que décrit par le deuxième mode de réalisation, dans un organe rotatif d'un moteur à combustion interne, au cours de laquelle à une première étape on loge la première bague dans l'organe rotatif, à une deuxième étape, on dispose la deuxième bague sur l'arbre primaire puis, à une troisième étape, on coulisse la deuxième bague dans la première bague, notamment en montant une boite de vitesses sur le moteur à combustion interne.

Un tel procédé reprend tout ou partie des caractéristiques mentionnées précédemment.

L'invention couvre également un kit d'embrayage qui comprend au moins un disque d'embrayage, un plateau d'embrayage et un palier de rotation selon le premier aspect. Un tel kit d'embrayage est reconnaissable en ce que ses composants sont rassemblés au sein d'un contenant, par exemple une boîte cartonnée, de manière à être distribué dans les réseaux après-vente.

L'invention couvre enfin un groupe motopropulseur qui comprend un moteur à combustion interne, une boite de vitesses et un palier de rotation tel que détaillé dans le présent document, ou un kit d'embrayage tel que décrit ci-dessus.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
La figure 1 est une représentation schématique d'un groupe motopropulseur monté dans un engin de mobilité, notamment un véhicule automobile;
La figure 2 est une coupe axiale d'un groupe motopropulseur comprenant un double volant amortisseur ;
La figure 3 est une coupe axiale d'un groupe motopropulseur comprenant un volant moteur ;
La figure 4 est une représentation schématique illustrant des efforts et débattements s'exerçant sur le palier de rotation depuis l'organe rotatif et l'arbre primaire, pour la compréhension de l'invention ;
La figure 5 est une perspective du palier de rotation selon un premier mode de réalisation de l'invention ;
La figure 6 illustre une coupe axiale du palier de rotation du premier mode illustré à la figure 1 ;
La figure 7 illustre une coupe axiale détaillée d'une liaison pivot du palier de rotation illustré à la figure 2 ;
La figure 8-1 et la figure 8-2 illustrent en perspective et en coupe radiale des exemples de palier de rotation selon un deuxième mode de réalisation de l'invention ;
La figure 9 illustre une coupe axiale du palier de rotation selon un troisième mode de réalisation de l'invention, comprenant au moins une bague additionnelle notamment monobloc ;
La figure 10 illustre une coupe axiale du palier de rotation selon un troisième mode de réalisation de l'invention, comprenant au moins une bague additionnelle notamment bi-bloc ;
La figure 11 illustre une coupe axiale du palier de rotation comprenant un premier exemple de liaison rotule selon un quatrième mode de réalisation de l'invention ;
La figure 12 illustre une coupe axiale du palier de rotation comprenant un autre exemple de liaison rotule selon le quatrième mode de réalisation de l'invention ;
La figure 13 illustre une coupe axiale du palier de rotation comprenant un autre exemple de liaison rotule selon le quatrième mode de réalisation de l'invention ;
La figure 14 et la figure 15 illustrent en coupe radiale et en coupe axiale un palier de rotation selon un cinquième mode de réalisation de l'invention ;
La figure 16 et la figure 17 illustrent en perspective et en coupe radiale un palier de rotation selon un sixième mode de réalisation de l'invention ;

Par « engin de mobilité », on entend tous les véhicules automobiles, passagers, mais aussi industriels, notamment les poids lourds, véhicules de transport en commun ou véhicules agricoles, ou encore tout engin de transport permettant de faire passer d'un point à un autre un être vivant et/ou un objet. Ce dernier peut comporter une motorisation hybride, une motorisation électrique et/ou de petite mobilité.

Sauf indication contraire, « axialement » signifie parallèlement à l'axe longitudinal X du palier de rotation ; « radialement » signifie selon un axe transversal coupant l'axe longitudinal X du palier de rotation ; « angulairement » ou « circonférentiellement » signifient autour de l'axe longitudinal X du palier de rotation. On utilisera à titre non limitatif et afin d'en faciliter la compréhension, les termes "intérieur / interne" ou "extérieur / externe" par rapport à l'axe X et suivant une orientation radiale, orthogonale à ladite orientation axiale ; et les termes "arrière" AR et "avant" AV pour définir la position relative d'un élément par rapport à un autre selon la direction axiale, un élément destiné à être placé proche du moteur thermique étant désigné par arrière et un élément destiné à être placé proche de la boîte de vitesses étant désigné par avant.

Dans la suite de la description et des revendications, on peut indexer certains éléments comme : la première, la deuxième et la troisième bagues. Il s'agit d'un simple indexage pour différencier et nommer des éléments proches mais non identiques. L'indexation n'implique pas une priorité d'un élément par rapport à un autre et on peut aisément inter-changer de telles dénominations sans sortir du cadre de la description.

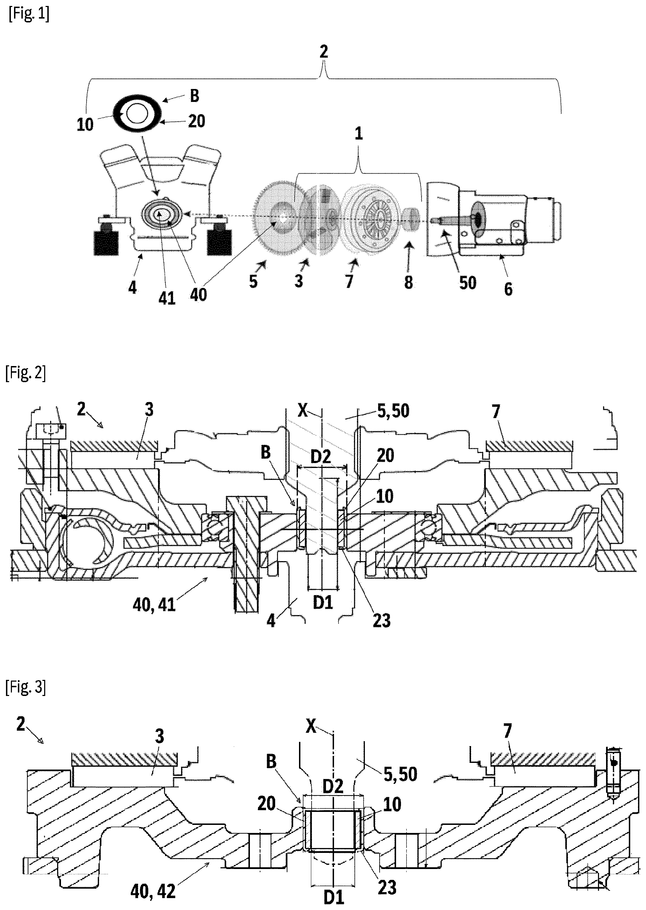

On a illustré sur les figures 1 à 5 un premier mode de réalisation de l'invention.

Les figures 1 à 2 illustrent un groupe motopropulseur 2 configuré pour mettre en mouvement un véhicule. Ce groupe motopropulseur 2 comprend un moteur 4 de transmission, ici à combustion interne, et une boite de vitesses 6 rapportée et solidarisée sur le moteur 4 de transmission à combustion interne. En variante, le moteur 4 peut être de type hybride, électrique et/ou de petite mobilité. Le groupe motopropulseur 2 comprend également un embrayage 1 installé entre le moteur 4 de transmission et la boite de vitesses 5 et dont la fonction est de coupler ou désaccoupler le moteur 4 par rapport à la boîte de vitesses 5.

L'embrayage 1 comprend diverses pièces telles qu'au moins un disque 3, autrement appelé disque de friction, configuré pour transmettre l'énergie du moteur 4 à la boite de vitesses 5 lorsqu'il est maintenu en contact par notamment contre un volant d'inertie par exemple un volant moteur, par une force d'appui générée par un plateau 7, autrement appelé plateau ou couvercle de poussée.

L'embrayage 1 est formé à partir d'un kit d'embrayage qui comprend au moins ledit disque 3, ledit plateau 7 et un palier de rotation B selon l'invention. Le kit d'embrayage peut également comprendre une butée 8 configurée pour appuyer sur le plateau 7 de sorte à relâcher la force d'appui sur le disque 3 et ainsi désaccoupler le moteur 4 par rapport à la boîte de vitesses 5. La butée 8 est commandée par un conducteur du véhicule ou par un système automatisé du véhicule.

Le palier de rotation B aligne co-axialement un axe de rotation d'un organe rotatif 40 du moteur 4, notamment d'un volant d'inertie ou d'un vilebrequin, avec un axe de rotation d'un arbre primaire 50 constitutif de la boîte de vitesses, tout en autorisant une rotation entre cet arbre primaire 50 et l'organe rotatif 40.

L'organe rotatif peut être un volant d'inertie, par exemple un volant d'inertie primaire 41 d'un double volant amortisseur (voir la figure 2) ou bien un volant moteur 42 (voir l'alternative en figure 3).

L'organe rotatif 40 peut être un moyeu de sortie d'un volant d'inertie ou d'un vilebrequin.

Le palier de rotation B comprend au moins deux bagues 10, 20 montées co-axialement l'une dans l'autre et en contact l'une avec l'autre. Les bagues, au nombre de deux dans le premier mode, partagent un axe longitudinal X visible sur les figures 2 à 15 et sont des portions de cylindre circulaire. L'ensemble des bagues du palier de rotation est configuré pour corriger ainsi tout désalignement, et ainsi aligner, l'arbre primaire avec l'organe rotatif, quelles que soit les sollicitations exercées entre ces derniers.

Une desdites au moins deux bagues est configurée pour se loger dans l'organe rotatif 40 et une autre desdites au moins deux bagues est configurée pour être montée sur l'arbre primaire 50 de la boite de vitesses 5, par exemple montée de manière coulissante.

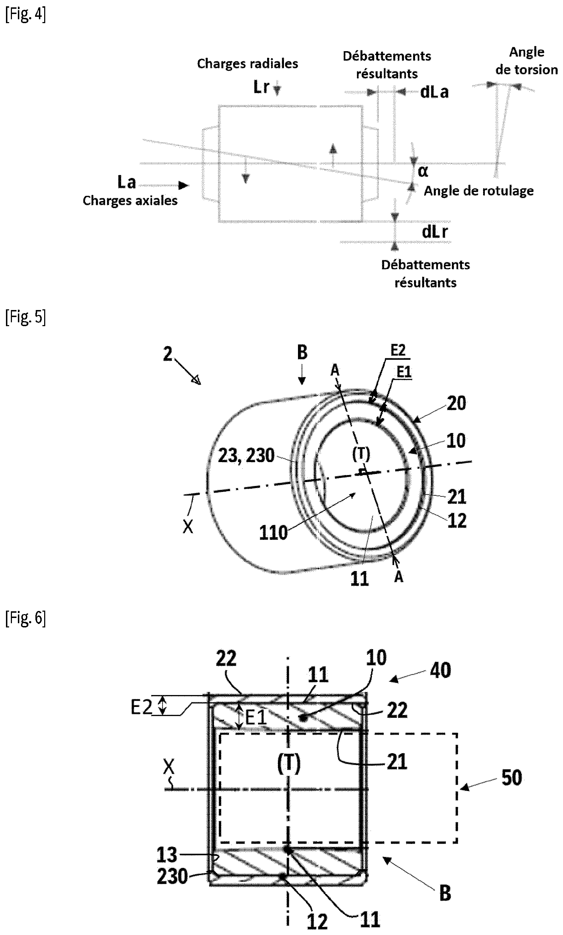

La figure 4 illustre, pour la compréhension de l'invention, les sollicitions exercées par l'arbre primaire et l'organe rotatif sur le palier de rotation. Y sont schématisés : les charges axiales et les débattements résultants (resp. "axial load" La et ""deflection under axial load" dLa en anglais) ; les charges radiales et les débattements résultants (resp. "radial load" Lr et "deflection under radial load" dLr en anglais) ; l'angle de torsion et l'angle de rotulage α (resp. "angle of torsion" et "conical angle" en anglais). Ces derniers peuvent désaligner l'arbre primaire et l'organe rotatif, en fonctionnement du palier de rotation ou en montage de l'arbre primaire.

Le palier de rotation selon l'invention est remarquable en ce que l'ensemble des bagues du palier de rotation soit configuré pour corriger tout désalignement, et ainsi aligner l'arbre primaire avec l'organe rotatif, quelles que soient les sollicitations citées exercées entre ces derniers.

Pour ce faire, les bagues 10, 20 sont réalisées en des matériaux différents, au moins l'un d'entre eux étant un matériau synthétique ou composite qui présente des propriétés qui réduisent le frottement, voir améliore son glissement notamment pour un matériau synthétique.

De par la forme et/ou le matériau utilisé, au moins une bague du palier de rotation est configurée pour réaliser un degré de liberté avec l'arbre primaire ou une autre bague du palier de rotation :
Une telle forme prévue à cet effet, en étant bombée ou sphérique ou conique, peut réaliser un contact respectivement de type pivot ou rotule ou butée avec l'arbre primaire ou une autre bague du palier de rotation. Alternativement ou en complément, un matériau prévu à cet effet, en synthétique ou composite, peut réaliser un contact coulissant ou flexible ou souple.

Le premier mode de réalisation propose ainsi un palier de rotation constitué, par exemple uniquement, de deux bagues enfilées d'une dans l'autre, une surface de glissement en rotation entre les deux bagues étant présente sur une face interne de la bague en matériau synthétique favorisant le glissement, que celle-ci soit placée à l'intérieur de la deuxième bague ou autour de cette dernière.

Le palier de rotation est remarquable en ce qu'il est exempté de corps roulant cylindrique, coniques ou à bille. Chaque palier de rotation comprend uniquement des bagues cylindriques, qui s'étendent le long de l'axe X. Ces bagues du palier de rotation sont issues d'un roulement à friction au lieu d'une technologie d'un roulement à corps roulant, ce qui offre une capacité de charge plus élevée, une meilleure résistance aux chocs et une surface de contact plus importante. Chacune des bagues cylindriques a pour centre l'axe X du palier de rotation.

Le palier de rotation selon l'invention est remarquable en ce qu'il comprend un nombre limité de bagues cylindriques, de préférence compris entre deux et quatre bagues. On utilise un nombre réduit de composants qui est bien inférieure à celui de la série de corps roulant d'un palier à roulement (type aiguilles ou billes). Ceci réduit les coûts de fabrication ainsi que les risques de montage et de fiabilité du palier de rotation.

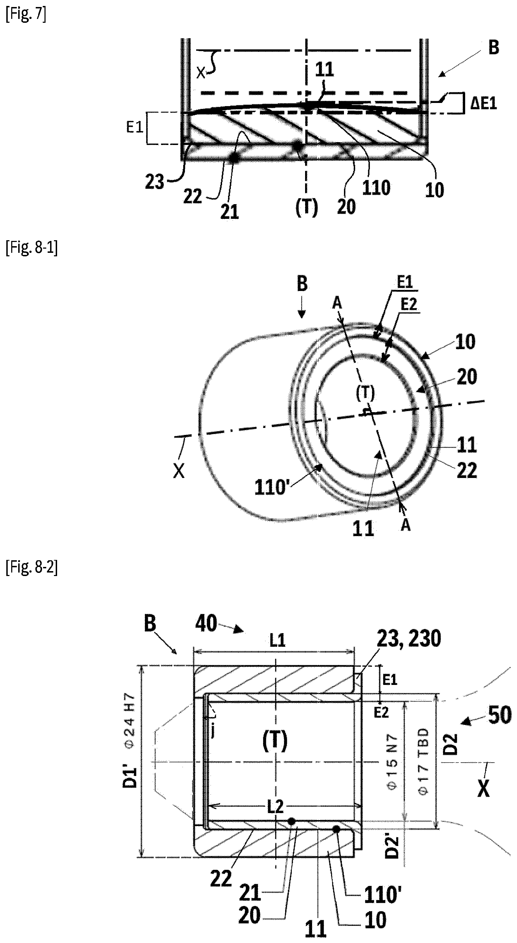

Dans le premier mode de réalisation, ces deux bagues sont une première bague dite intérieure 10 et une deuxième bague dite extérieure 20. Avantageusement la deuxième bague 20 est configurée pour se loger dans l'organe rotatif et être au contact de celui-ci. Cette deuxième bague 20 est montée serrée ou emmanchée en force soit à l'intérieur de l'organe rotatif 40 (voir les figures 5 à 7 et figures. 9 à 15) soit avec l'arbre primaire (voir les figures 8-1 et figures 8-2 du deuxième mode).

Dans les exemples illustrés, le diamètre de la face extérieure de la deuxième bague 20, dit diamètre extérieure D2 de la première bague est réalisé selon un ajustage monté serré qui garantit un maintien de la première bague à l'intérieur d'un lamage réalisé dans l'organe rotatif.

Dès lors la première bague 10 présente un diamètre extérieur D1', D1" qui est inférieur au diamètre intérieur D2' de la deuxième bague 20.

En variante non illustrée, le diamètre de la face extérieure de la première bague, dit diamètre extérieure D1', D1" de la première bague peut être réalisé selon un ajustage montée glissant qui garantit un coulissement axial sans jeu radial de la première bague à l'intérieur d'un lamage réalisé dans l'organe rotatif. Dès lors la première bague peut présenter un diamètre extérieur supérieur au diamètre intérieur de la bague extérieure ;
Par ailleurs, la deuxième bague 20 est en un matériau dont la dureté est supérieure à la dureté du matériau constitutif de la première bague 10. Par exemple, le matériau de la deuxième bague 20 est un métal, notamment de l'acier, de l'inox ou un alliage d'aluminium.

La première bague 10 quant à elle est une bague auto-lubrifiée, c'est-à-dire réalisée en un matériau synthétique favorisant le glissement, comme par exemple du Polytétrafluoroéthylène (PTFE) ou un plastique auto-lubrifiant.

Autrement dit une bague à base de métal poreux (incluant des porosités entre 15 et 35 % du volume), avec incorporation de lubrifiant (huile, graphite, etc.) dans les porosités.

Lors d'un mouvement relatif entre ces bagues, le lubrifiant de celle auto-lubrifiée se diffusera par les porosités (entre 15 et 35 % du volume) de la couche antifriction et recouvrira sa surface. La structure d'une bague auto-lubrifiée, comparable à une éponge, restitue l'huile en fonctionnement du palier de rotation et l'absorbe à l'arrêt du palier de rotation.

Une bague auto-lubrifiée n'a besoin d'aucun(e) maintenance ni ajout de graisse, pour augmenter la durée de vie du palier de rotation. Le matériau synthétique auto-lubrifié est adapté a des accélérations et vitesses élevées (4000tr/min) et a des charges statiques et des dynamiques (C/C0) supérieures à 300N.

Dans le premier mode de réalisation, les figures 5 à 7 illustrent le palier de rotation B où la première bague 10 est disposée dans la deuxième bague 20, un mouvement de rotation entre ces deux bagues étant interdit. Le mouvement de rotation entre la première bague 10 et la deuxième bague 20 est interdit par un moyen de blocage en rotation, réalisé par complémentarité de formes. La forme de la deuxième bague 20 est complémentaire à la forme de la première bague 10 et adaptée à bloquer cette dernière.

Selon un exemple, le moyen de blocage en rotation est une dent qui coopère avec une rainure, les dent et rainure étant réalisées sur l'une et l'autre des bagues 10, 20.

Ce moyen de blocage limite un degré de liberté, à minima une rotation, mais il autorise un coulissement axial de la première bague 10 par rapport à la deuxième bague 20, de manière à monter l'une dans l'autre. Ce qui autorise un degré de liberté additionnel, ici axial.

De manière alternative, la première bague 10 et la deuxième bague 20 peuvent être solidaires l'une de l'autre, selon un assemblage hyperstatique.

Par exemple, la première bague 10 peut être moulée par injection à l'intérieur de la deuxième bague 20, cette dernière servant alors de moule.

Par ailleurs, la deuxième bague 20 est configurée pour être logée dans l'organe rotatif 40.

La figure 6 illustre une coupe AA visible sur la figure 5. Sur cette figure 6, la première bague 10 présente une épaisseur E1 supérieure à une épaisseur E2 de la deuxième bague 20. A titre d'exemple, A titre d'exemple, E2 peut être égale à environ 1 mm.

Les épaisseurs E1 et E2 sont mesurées le long d'un axe transversal T perpendiculaire à l'axe X du palier de rotation B respectivement:
- pour l'épaisseur E1, entre la surface interne 11 et une surface externe 12 de la première bague 10;
- pour l'épaisseur E2, entre une face intérieure 21 et une face extérieure 22 de la deuxième bague 20.

L'épaisseur E1, mesuré le long d'un axe transversal T, peut être l'épaisseur minimale de la première bague 10. L'épaisseur E2, mesuré le long d'un axe transversal T, peut être l'épaisseur maximale de la deuxième bague 20. En particulier l'épaisseur E1 est définie entre les diamètres intérieur D1 et extérieur D1' ou D1" de la première bague. L'épaisseur E2 est définie entre les diamètres intérieur D2' et extérieur D2 de la deuxième bague.

Dans le premier mode, la première bague 10 présente ici une épaisseur E1 variable et supérieure à une épaisseur E2 variable de la deuxième bague 20, en particulier supérieure ou égale à 3 fois l'épaisseur de la deuxième bague.

La figure 6 montre la présence d'un flanc réalisé sur la deuxième bague 20, à une extrémité longitudinale de celle-ci. Un tel flanc forme une butée à l'égard de la première bague 10, en limitant la translation dit fin de course de la première bague 10 dans la deuxième bague 20 le long de l'axe X.

Par ailleurs, la deuxième bague 20 comprend un volume intérieur délimité entre
- une première partie délimitée par le fond de la bague 20, depuis lequel est logée la bague intérieure 10, et ; - une seconde partie (d'extension radiale) délimitée par la ou les face(s) terminale(s) 23 d'appui, configurée(s) pour recevoir (chacune) un bord 13 de la première bague 10.

On notera que, selon ce premier mode de réalisation de l'invention, la première bague 10 est axialement logée dans la deuxième bague 20, cette dernière étant réalisée sous forme de cage.

On entend par cage une bague 20 ménageant à ses faces terminales des parois latérales. Les parois latérales délimitent avec le fond ledit volume intérieur de la bague 20. Autrement dit une bague 20 dont les dimensions débordent axialement de chaque face terminale de la première bague 10, de sorte à entourer la ou les autres bagues cylindriques du palier.

Dans le premier mode de réalisation, la première bague 10 est disposée dans la deuxième bague 20, un mouvement axial et radial entre ces deux bagues étant interdit. La deuxième bague 20 délimite ainsi un volume intérieur dont une première partie est occupée par la première bague 10 et une seconde partie est configurée pour recevoir l'arbre primaire 50.

Dans ce premier mode de réalisation, la première bague 10 dite bague intérieure est réalisée dans le matériau synthétique qui favorise le glissement, à titre d'exemple la rotation entre l'arbre primaire et l'organe rotatif. Cette région de glissement est commune aux différents modes de réalisation illustrés, référencée par la suite 100, 110, 100' ou 310 selon les modes de réalisation.

Avantageusement, cette région de glissement peut être réalisée, sur l'intérieur d'une bague, par exemple au niveau d'une zone d'ajustement de l'arbre primaire, en particulier par contact direct avec l'arbre primaire. Alternativement ou de manière additionnelle, cette région de glissement peut être réalisée, sur l'extérieur d'une bague, par exemple au niveau d'une zone de montage recevant une autre bague adjacente du palier de rotation.

Dans ce premier mode de réalisation, la surface qui autorise la rotation entre l'arbre primaire et l'organe rotatif est la surface interne 11 de la bague intérieure 10. En outre, cette première bague 10 est configurée pour être montée coulissante sur l'arbre primaire 50. La surface interne 11 de la première bague 10 est prévue pour accepter une rotation. Ce qui autorise un degré de liberté. La surface interne 11 définit la région centrale de la première bague 10.

Par ailleurs, la première bague 10 présente une face latérale dite bord 13, qui vient en appui contre une face terminale 23 de la deuxième bague 20. La face terminale 23 d'appui de la deuxième bague 20 peut définir une butée 230, de formes complémentaires au bord 13 de la première bague 10.

Le bord 13 peut résulter d'un moulage de la première bague 10.

La butée 230 ou face terminale 23 d'appui de la deuxième bague 20 quant à elle peut être par emboutissage ou estampage, par exemple à froid. On entend par face terminale 23 l'une des tranches de ladite bague 20. Autrement dit une variation ΔE2 d'épaisseur dans la direction radiale, par rapport au reste de la deuxième bague. La face terminale 23 d'appui, contre laquelle un bord 13 de la bague intérieure vient en appui, forme un moyen de blocage axial desdites bagues 10, 20. La butée 230 forme ainsi un moyen de blocage axial desdites bagues 10, 20.

A titre d'exemple, la deuxième bague 20 est délimitée axialement entre deux faces terminales 23, chacune formant une butée 230.

En présence de cette butée 230, la deuxième bague 20 dépasse axialement du bord 13 de la première bague 10. Ainsi, la butée 230 est proportionnelle à l'épaisseur E2 de la bague 20. La variation ΔE2 d'épaisseur est relativement faible, inférieure à 0,3 fois l'épaisseur E2 de la bague 20. Le bord 13 et/ou la butée 230 assure(nt) la position axiale de la deuxième bague 20 par rapport à la première bague 10, tout en autorisant une rotation de la deuxième bague 20 à l'intérieur de la première bague 10.

Par ailleurs, la butée 230 est issue de matière de la deuxième bague 20. La butée résulte d'une déformation mécanique, notamment un emboutissage, de la deuxième bague 20.

Les figures 6-7 illustrent en détails un exemple de montage coulissant amélioré avec l'arbre primaire, dans lequel la surface interne 11 de la première bague 10 définit une région de pivotement 110 avec l'arbre primaire. Autrement dit une zone où prend place le centrage de l'arbre primaire par rapport à la première bague, consécutif du montage dudit arbre.

La première bague 10 forme ainsi un(e) palier ou bague de pivotement à l'égard de l'arbre primaire, notamment en portant celle-ci. La région de pivotement 110 définit une surface de contact bombée, de préférence de type convexe, qui est configurée pour autoriser un mouvement de pivot entre la première bague 10 et l'arbre primaire 50.

Ce qui autorise au moins un degré de liberté dit combiné (ici axial et radial). En particulier un degré de liberté qui est supérieur aux paliers de l'état de l'art actuel, entre autres bien plus élevé que les roulements à aiguilles ou les roulements monobloc.

La région de pivotement 110 est ménagée selon une variation ΔE1 d'épaisseur dans la direction radiale, par rapport au reste de la deuxième bague. La région de pivotement 110 est proportionnelle à l'épaisseur E1 de la bague 10. La variation ΔE1 d'épaisseur est relativement faible et inférieure à 0,3 fois l'épaisseur E1 de la bague 10.

A titre d'exemple, la première bague et la deuxième bague comprennent des moyens complémentaires de blocage en rotation, réalisés par une coopération concave-convexe de surfaces interne-externes des première et deuxième bagues. En particulier, la surface externe d'une des bagues peut être bombée et reçue dans la surface interne de l'autre bague.

Dans le deuxième mode de réalisation des figures 8-1 à 8-2, la position de la première bague et de la deuxième sont inversées. Dès lors la deuxième bague 20 est montée serrée ou emmanchée avec l'arbre primaire. La première bague 10 est, quant à elle, configurée pour être logée dans l'organe rotatif 40. C'est ainsi que la deuxième bague 20 est disposée dans la première bague 10.

Notamment, la première bague 10 est configurée pour être montée coulissante sur la deuxième bague 20. C'est ainsi que la deuxième bague 20 présente à leur zone de contact une région de pivotement 110' prévue entre ces deux bagues. La région de pivotement 110' est la zone où prend place le glissement entre la première bague 10 et la deuxième bague 20, consécutif notamment à l'actionnement de l'embrayage. Ce glissement est rendu possible par le fait que la première bague 10 (ici extérieure) est recouverte en sa surface interne 11, d'un matériau synthétique (type PTFE) favorisant le glissement, et avantageusement, par le fait que : la deuxième bague 20 est composée de 2 matériaux, en sa partie externe, une face extérieure 22 métallique, de type tôle, permettant la friction et la rotation avec la surface interne 11.

En outre, cette région de pivotement 110' est formée par la surface externe 12 de la première bague 10 et par la face intérieure 21 de la deuxième bague 20. La deuxième bague 20 forme ainsi un(e) palier ou bague de pivotement à l'égard de la première bague 10, notamment en portant celle-ci.

Le deuxième mode de réalisation du palier de rotation B peut être fabriquer et assemblé de la manière suivante : à une première étape, on loge la première bague 10 dans l'organe rotatif 40 et de manière à ce que sa surface externe 46 vienne en contact de l'organe rotatif 40. A une deuxième étape, on dispose ou on enfile la deuxième bague 20 sur l'arbre primaire 50, notamment en raison du fait que la face intérieure 44 de la deuxième bague 20 présente un ajustage glissant sur l'arbre primaire 50. A une troisième étape, on coulisse la deuxième bague 20 dans la première bague 10, soit seule, soit en même temps qu'on monte une boite de vitesses 6 sur le moteur 4.

En particulier dans l'exemple de la figure 8-2, la face terminale 23, et notamment la butée 230, de la deuxième bague 20 peut s'étendre sous forme de collerette, dans la direction radiale. Elle assure ainsi la position axiale de la deuxième bague par rapport à la première bague. Cette butée 230 résulte d'une déformation mécanique, notamment un emboutissage, de la deuxième bague.

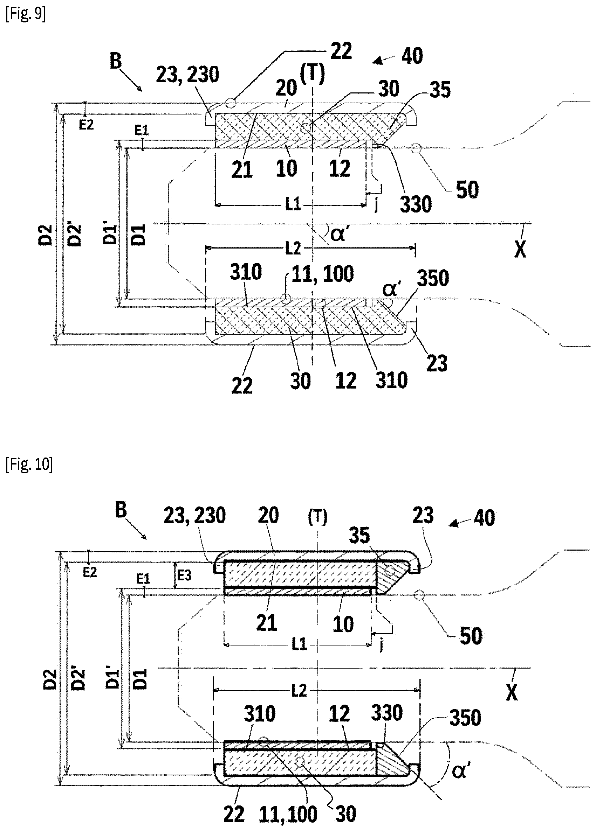

Le troisième mode de réalisation illustré aux figures 9 à 10, est sensiblement similaire au premier mode, à l'exception du fait que des moyens d'amortissement élastiques sont ménagés entre les première et deuxième bague, pour autoriser un degré de liberté. Ceci afin d'amortir les efforts au sein du palier de rotation et de réduire la pression de surface appliquée par l'arbre primaire 50.

De manière analogue au premier mode de réalisation, la bague intérieure 10 est réalisée dans le matériau synthétique qui favorise le glissement. Ainsi la surface qui autorise la rotation entre l'arbre primaire et l'organe rotatif est la surface interne 11 de la bague intérieure 10.

En outre, la première bague 10 est configurée pour être montée coulissante sur l'arbre primaire 50. La surface interne 11 de la première bague 10 est prévue pour accepter une rotation. D'où un degré de liberté axial additionnel;
Les figures 9 à 10 illustrent en détails un exemple de montage coulissant amélioré avec l'arbre primaire, dans lequel la première bague 10 forme une bague lisse dit coussinet (appelé aussi palier plisse) à l'égard de l'arbre primaire, la première bague 10 étant avantageusement réalisée dans le matériau auto-lubrifié qui favorise le glissement avec l'arbre primaire.

Par ailleurs, le palier de rotation B comprend en outre au moins une bague additionnelle dite troisième bague, qui réalise les moyens élastiques. Cette bague additionnelle est logée à l'intérieur de la deuxième bague 20, dans le fond du volume interne de cette dernière et/ou sur un côté de cette dernière.

Cette bague additionnelle peut être une bague d'amortissement 30 qui est montée et intercalée radialement entre les première et deuxième bague 10, 20. Cette bague d'amortissement 30 est alors configurée avec une élasticité accrue du palier face au effort radiaux provenant de l'arbre primaire et s'exerçant entre la bague intérieure 10 et la bague extérieure 20. Ainsi les faces de contact élastique resp. intérieure et extérieure de la bague d'amortissement 30, sont prévues pour atténuer les efforts résultants radialement resp. avec la première bague et la deuxième bague. Ce qui autorise une déflection au sein du palier de rotation.

La bague d'amortissement 30 est réalisée à base de polymère, pour assurer une telle élasticité accrue du palier de rotation, par exemple dans un matériau à base de caoutchouc. Autrement dit avec un matériau à faible un coefficient de friction, mais qui demeure toujours stable. En outre, la face intérieure de la bague d'amortissement 30 définit un fond et en particulier une région de guidage de la première bague 10 avec l'arbre primaire. La région de guidage forme ici la région de glissement. On améliore ainsi le comportement à la friction, en réduisant le coefficient de friction.

La face intérieure de la bague d'amortissement 30 est alors ménagée pour recevoir la première bague 10, notamment sous une forme complémentaire à la première bague 10.

Elle peut définir la région de glissement pour la course de la première bague 10, dite piste de guidage, et avantageusement une butée dite paroi d'arrêt 330 pour la fin de course de la première bague 10. En présence de cette butée 330, la bague d'amortissement 30 dépasse axialement de la face terminale 13 de la première bague 10.

Cette butée 330 forme ainsi un moyen de blocage axial desdites bagues 10, 20.

La butée ou paroi d'arrêt 330 peut assurer une marge de sécurité maximale autorisant un déplacement en axial, dit jeu j de glissement, ceci pour ajuster la position axiale de la deuxième bague 10 par rapport au deuxième et troisième bagues, tout en autorisant une rotation de la première bague 10 avec l'arbre primaire.

Par ailleurs, cette bague additionnelle est une bague de guidage 35 disposée aux abords de l'ouverture du palier de rotation, de telle manière à être configurée pour centrer l'arbre primaire s'insérant à l'entrée du palier. La bague de guidage 35 comprend un alésage conique dit cuvette, autrement dit en section une paroi de guidage 350 angulaire, s'étendant notamment sur 360 degrés, qui est de forme adaptée à guider et à centrer l'arbre primaire selon l'axe X.

Cette paroi de guidage 350 est biseautée, c'est-à-dire de forme oblique, i.e. d'orientation radiale et inclinée selon un angle d'inclinaison α' défini par rapport à l'axe X, pour guider et à centrer l'arbre primaire selon l'axe X. Cet angle d'inclinaison α' est lié à l'angle de rotulage α de l'arbre primaire. Cet angle d'inclinaison α' est compris entre 10 degrés et 80 degrés, ici égal à 45 degrés.

Cette bague de guidage 35 peut alors être configurée pour assurer la protection de la région de glissement 310, ici celle de la liaison glissante. Autrement dit, pour assurer la protection d'une autre bague en matériau synthétique ou composite, qui est ici la première bague 10.

Cette bague de guidage 35 est logée dans la deuxième bague 20, dans le fond de cette dernière, et elle est avantageusement montée en appui dans le fond de la deuxième bague 20. Cette bague de guidage 35 peut être configurée avec une flexion ou élasticité accrue du palier face au effort provenant de l'arbre primaire et s'exerçant avec la bague intérieure 10.

La bague de guidage 35 est réalisée à base de polymère, pour assurer une telle flexibilité ou élasticité accrue du palier de rotation, par exemple dans un matériau à base de plastique. La bague de guidage 35 ne forme ici aucun joint : Elle est exemptée de dispositif d'étanchéité.

Dans l'exemple de la figure 9, les bagues d'amortissement 30 et de guidage 35 peuvent être issues d'une seule et même matière, et sont avantageusement réalisées en une seule pièce dite troisième bague. Cette troisième bague est alors de forme monobloc. Cette troisième bague 30, 35 s'étend en totalité à l'intérieur du volume interne de la deuxième bague 20.

Par ailleurs un logement est ménagé dans la bague d'amortissement 30, depuis la face intérieure, et ouvert radialement vers l'intérieur, de manière à y loger la première bague 10.

Le logement peut être réalisé depuis le pourtour radialement interne de la bague d'amortissement 30, de préférence par moulage. Un tel logement de la bague d'amortissement 30 est délimité par lesdites régions de glissement et paroi d'arrêt.

Ce logement est ouvert d'un côté du palier, en particulier du côté opposé à la boite de vitesses, été il est avantageusement de dimensions adaptées à celles de la première bague 10.

En variante non illustrée, la troisième bague est de forme bi-bloc : les bagues d'amortissement 30 et de guidage 35 peuvent alors être distinctes l'une de l'autre, en étant issues d'un seul et même matériau (initialement la troisième bague), par la suite fendu radialement en deux blocs pour réaliser ces bagues d'amortissement 30 et de guidage 35.

Dans l'exemple alternatif de la figure 10, la bague d'amortissement 30 et la bague de guidage 35 sont distinctes l'une de l'autre, en étant réalisées dans des matériaux différents ayant des densités ou duretés différentes. La bague d'amortissement 30 s'étend partiellement à l'intérieur du volume interne de la deuxième bague 20. La bague de guidage 35 s'étend de préférence à l'intérieur du volume interne de la deuxième bague 20. D'où un palier de rotation ayant un nombre de quatre bagues cylindriques, qui sont réalisés chacune différemment de par leur forme et matériau. On assigne à chaque bague une fonction propre, ce qui améliore leur performance. On choisit :
- pour la bague d'amortissement 30, un matériau et une densité qui sont uniquement liées à la l'amortissement du palier de rotation, de préférence en caoutchouc synthétique.
- pour la bague de guidage 35, un matériau et une densité qui sont uniquement liées à la protection du palier de rotation, de préférence en plastique thermoformé.

Dans les exemples illustrés, la bague d'amortissement 30 et la bague de guidage 35 sont distinctes et elles peuvent être rapprochées l'une de l'autre. Elles sont disposées axialement en regard l'une de l'autre, avantageusement à l'intérieur de la deuxième bague 20.

La deuxième bague 20 délimite alors un fond et avantageusement un volume interne, à l'intérieur duquel s'étend en totalité l'au moins une troisième bague, en particulier la ou les bagues d'amortissement et de guidage.

On note que, dans les exemples illustrés, les bagues 10, 20, 30, 35 sont réalisées : dans des matériaux différents ; dans des formes différentes ; dans des dimensions différentes. Ainsi dans les exemples illustrés : La première bague 10 est d'épaisseur E1 strictement inférieure à l'épaisseur E2 de la deuxième bague 20 ; La deuxième bague 20 est d'épaisseur E2 strictement inférieure à l'épaisseur E3 de la troisième bague ; La première bague 10 est de longueur L1 strictement inférieure à la longueur L2 de la deuxième bague 20 ; La troisième bague est de longueur strictement inférieure à celle des première et deuxième bagues.

A titre d'exemple : La longueur L2 de la deuxième bague 20 peut être égale à environ 20 mm.

Le diamètre extérieur D2 de la bague 20 peut être égale à environ 17 mm.

Le diamètre intérieur D2' de la bague 20peut être égale à environ 15 mm.

Le diamètre extérieur D1' de la bague 10 peut être égale à environ 24 mm.

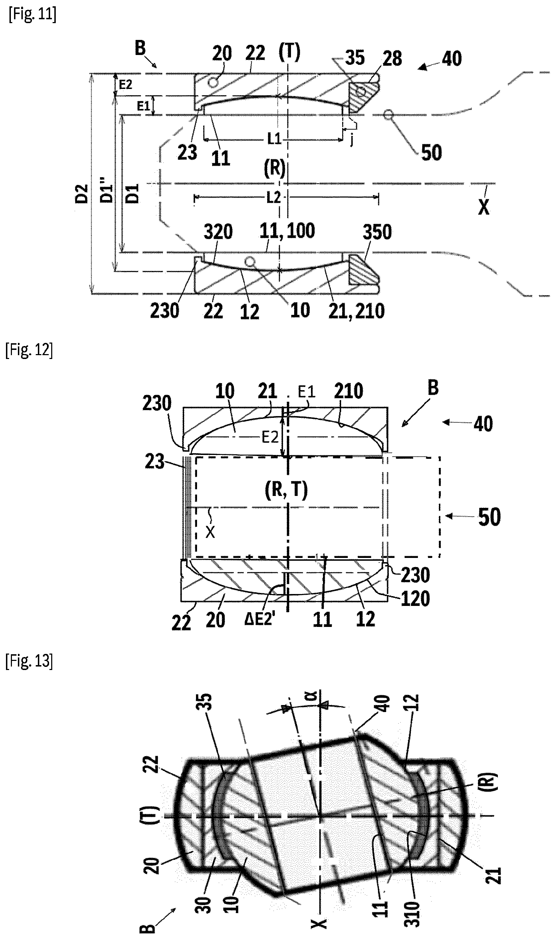

Le quatrième mode de réalisation illustré aux figures 11 à 13, est sensiblement similaire au premier mode, à l'exception du fait que des moyens de liaison à rotule sont ménagés entre les première et deuxième bague 10, 20 cylindriques, pour autoriser un degré de liberté. Ceci a pour effet d'absorber les efforts dus aux mouvements de nutation de la transmission et des bagues. Ceci afin de ralentir l'usure et la fatigue, avec l'arbre primaire et avec l'organe rotatif.

Les figures 11, 12 et 13 illustrent différents exemples possibles, selon le quatrième mode, d'un montage d'une liaison de type rotule entre les première et deuxième bagues 10, 20.

La première bague et la deuxième bague sont de formes complémentaires.

La première bague 10 forme une bague sphéroïdale dite bague à rotule, qui est délimitée de préférence par une surface de contact 120 externe sphérique ou convexe.

La surface de contact 120 est ménagée sur le pourtour radialement externe de la deuxième bague, de préférence par moulage.

Par ailleurs, cette bague sphéroïdale est montée articulée (dit rotulant) avec la deuxième bague, à l'intérieur d'un volume interne de la deuxième bague prévu à cet effet. Le volume interne de la deuxième bague 20 est délimité sous une forme convexe, avantageusement de complémentarité de forme avec la bague sphéroïdale. On augmente l'angle de rotulage α entre les bagues 10, 20.

De manière analogue au premier mode de réalisation, la bague intérieure 10 est également réalisée dans le matériau synthétique qui favorise le glissement. Ainsi la surface qui autorise la rotation entre l'arbre primaire et l'organe rotatif est la surface interne 11 de la bague intérieure 10. En outre, la première bague 10 est configurée pour être montée coulissante sur l'arbre primaire 50. La surface interne 11 de la première bague 10 est prévue pour accepter une rotation. D'où un degré de liberté axial additionnel;

De manière analogue au troisième mode de réalisation, le palier de rotation B comprend également en outre au moins une bague additionnelle dite troisième bague, qui réalise les moyens élastiques. Cette bague additionnelle est logée à l'intérieur de la deuxième bague 20, dans le fond du volume interne de cette dernière ou sur un côté de cette dernière.

Dans l'alternative de la figure 11, la bague additionnelle du palier de rotation peut être une bague de guidage 35 disposée aux abords de l'ouverture du palier de rotation, de telle manière à être configurée pour centrer l'arbre primaire s'insérant à l'entrée du palier.

Cette bague de guidage 35 est logée dans la deuxième bague 20, avantageusement montée en appui dans le fond de la deuxième bague 20.

Cette bague de guidage 35 peut alors être configurée pour assurer la protection de la région de glissement référencée ici 310, ici celle de la liaison rotule. Autrement dit, pour assurer la protection d'une autre bague en matériau synthétique ou composite, qui est ici la première bague 10.

Cette bague de guidage 35 peut être configurée avec une flexion ou élasticité accrue du palier face au effort provenant de l'arbre primaire et s'exerçant avec la bague intérieure 10. La bague de guidage 35 est réalisée à base de polymère, pour assurer une telle flexibilité ou élasticité accrue du palier de rotation, par exemple dans un matériau à base de plastique.

Dans l'alternative de la figure 13, la bague additionnelle du palier de rotation peut être une bague d'amortissement 30 qui est montée et intercalée radialement entre les première et deuxième bague 10, 20. Cette bague d'amortissement 30 est alors configurée avec une élasticité accrue du palier face au effort radiaux provenant de l'arbre primaire et s'exerçant entre la bague intérieure 10 et la bague extérieure 20. Ainsi les faces de contact élastique resp. intérieure et extérieure de la bague d'amortissement 30, sont prévues pour atténuer les efforts résultants radialement resp. avec la première bague et la deuxième bague. Ce qui autorise une déflection au sein du palier de rotation.

Dans ce quatrième mode, cette bague sphéroïdale peut être en outre montée articulée (dit rotulant) avec la bague d'amortissement 30. Le volume interne de la deuxième bague 20 reçoit la troisième bague dite bague d'amortissement 30 qui reçoit elle-même la bague sphéroïdale. Les première, deuxième et troisième bagues sont de formes complémentaires. On augmente l'angle de rotulage α entre les bagues 10, 20, 30.

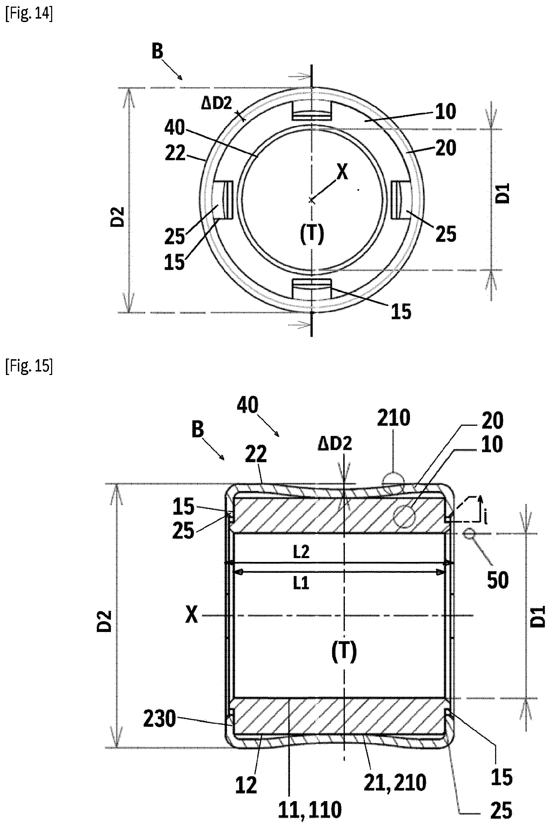

Le cinquième mode de réalisation illustré aux figures 14 à 15, est sensiblement similaire au premier mode, à l'exception du fait que des moyens de déformation flexible sont ménagés sur la deuxième bague 20, pour autoriser au moins un degré de liberté.

Ainsi le palier de rotation délimite une cage externe, en forme de "U" en section.

En outre, la cage externe est configurée flexible, ceci afin d'autoriser un déplacement radial de la première bague au fond de la cage flexible. En outre, la cage externe est configurée flexible pour absorber les écarts d'alignement avec l'arbre primaire, et notamment au niveau de la première bague, en cas de forte charge radiale provenant de l'arbre primaire.

Cette cage externe flexible est réalisée dans une tôle fine de faible épaisseur pouvant être inférieur à 10 mm. Cette tôle métallique est de l'ordre 0.8 mm d'épaisseur. Une telle finesse d'épaisseur assure une meilleure déformation flexible notamment en son centre, au contact de la ou des autres bagues cylindriques.

Dans ce cinquième mode, la cage externe flexible entoure la première bague, dont la surface de contact externe est configurée pour être flexible et pour réaliser un degré de liberté radial. La surface est localisée à l'intérieur d'un volume interne délimité par ladite cage externe flexible. Ainsi la surface de contact interne de la cage flexible est configurée pour se déformer au contact de la première bague 10. La première bague 20 définit un palier lisse interne, qui peut être auto-lubrifié.

La deuxième bague 20 quant à elle définit ladite cage externe flexible. Dès lors, la première bague 10 est solidaire en rotation avec la deuxième bague 20. Aucun mouvement de rotation n'est autorisé, ce qui assure le glissement de la première bague 10 avec l'arbre primaire uniquement, au niveau de la surface interne 11.

En outre, l'épaisseur de la deuxième bague 20 est supérieure à trois fois l'épaisseur de la première bague 20, de préférence inférieure à cinq fois l'épaisseur de la première bague 20. Cet ordre de grandeur garantit une faible raideur spécifique de la deuxième bague 20 flexible.

Cette cage externe flexible présente en son centre une surface de contact en forme de bossage 210 central, qui forme un contact linéaire sur toute sa circonférence avec la première bague 10.

Ce bossage 210 central est configuré pour autoriser un mouvement de pivotement (angle de rotulage α de l'arbre primaire) de la première bague à l'intérieur de la deuxième bague flexible, au contact de cette dernière. Autrement dit pour réaliser un autre degré de liberté. La forme du **bossage** 210 central est prévue à cet effet, en étant bombée ou convexe, ; La hauteur du bossage 210 central est environ de l'ordre 0.5 mm d'épaisseur.

Ce bossage 210 central est destiné à se déformer flexiblement, pour autoriser un certain jeu radial, autrement dit un déplacement radial d'une autre bague en son centre. Dès lors la première bague a une position angulaire sous charge qui s'ajuste au besoin une fois l'arbre emmanché, la première bague peut pivoter sur le bossage central, et ainsi s'adapter au désalignement.

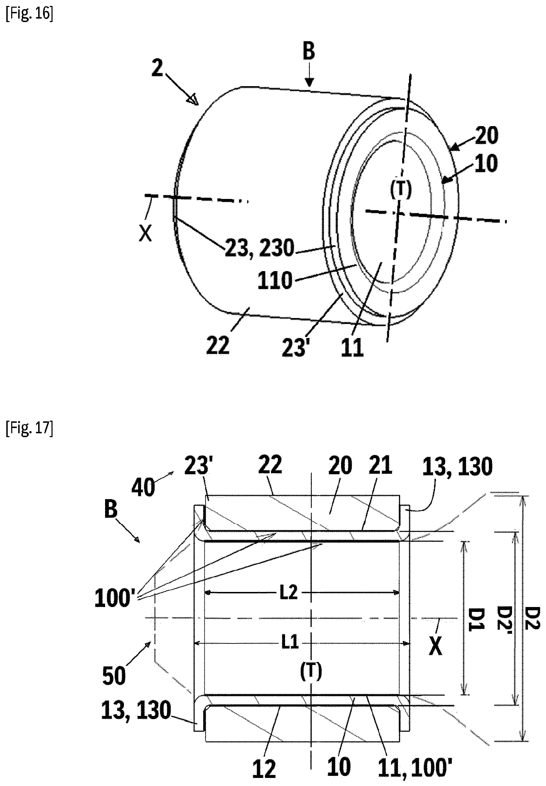

Le sixième mode de réalisation illustré aux figures 16 à 17, est sensiblement similaire au premier mode, à l'exception du fait que la deuxième bague 10 est disposée dans la première bague 20. Les formes et fonction des bagues sont ainsi inversées mutatis mutandis par rapport au premier mode. La deuxième bague 20 présente ainsi une face latérale dite bord 23', qui vient en appui contre une face terminale 13 de la première bague 10. La face terminale 13 d'appui de la première bague 10 peut définir une butée 130, de formes complémentaires au bord 23' de la deuxième bague 20.

Les deux bagues 10 et 20 ont en leurs surfaces internes 11 et face intérieure 21 un revêtement synthétique permettant le glissement entre les deux bagues 10, 20, mais également entre la bague interne 10 et l'arbre primaire de boite 50. Dès lors, la deuxième bague 20 est configurée pour être logée dans la bague 10 et montée dans l'organe rotatif 40 au moyen d'un ajustement serré.

Ce glissement est rendu possible par le fait que la deuxième bague 20 est recouverte en sa surface interne 21, d'un matériau synthétique (type PTFE) favorisant le glissement. Autrement dit, la région de glissement 100' est réalisée par la surface interne 21 de la deuxième bague 20.

Dans ce sixième mode de réalisation, un tel palier de rotation B multiplie par deux, le nombre de surfaces roulantes en comparaison avec les autres modes de réalisation précédemment cités. L'ajustement glissant entre les deux bagues 10, 20, ainsi que l'ajustage également glissant de la bague intérieure 10 avec l'arbre primaire 50, offre ainsi un degré de liberté radiale nécessaire à la fonction d'absorption de désalignement de l'arbre primaire 50.

En comparaison avec le premier mode de réalisation, l'usage de deux surfaces glissantes permet d'optimiser et de mieux répartir la charge radiale engendrée par le problème de désalignement de l'arbre primaire 50 avec l'organe rotatif 40. Cette charge radiale s'applique sur une surface de contact et de friction accrue, cette spécificité permet d'augmenter la pression de surface maximale admissible pour une vitesse de rotation donnés

L'avantage principale de ce sixième mode de réalisation est qu'il permet de réduire les prérequis techniques concernant le matériau synthétique utilisé pour le revêtement des surfaces de friction des deux bagues et ainsi d'allonger sa durabilité et sa capacité d'usage et d'application.

En outre, la bague intérieure 10 définit une cage entourant au moins la bague extérieure. L'usage d'une bague intérieure en forme de "U" avec jeu axial "J" permettant le déplacement des deux bagues entre elles, offre un degré de liberté nécessaire a l'absorption des vibrations axial provenant du moteur. En outre, la forme de "U" en section de la bague intérieure 10, a pour fonction de limiter le déplacement axial de la bague extérieure 20 avec la bague intérieure 10, tout en garantissant une surface de contact radiale et axiale avec un coefficient de friction adaptée au glissement.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

L'usage du verbe « comporter », « comprendre » ou « inclure » et de ses formes conjuguées n'exclut pas la présence d'autres éléments ou d'autres étapes que ceux énoncés dans une revendication. Dans les revendications, tout signe de référence entre parenthèses ne saurait être interprété comme une limitation de revendication.

Les dimensions indiquées ou illustrées peuvent ne pas être à l'échelle et ne correspondent qu'à un modèle de limiteur de couple particulier développé par la demanderesse. On adaptera autant que de besoin le procédé de fabrication selon l'invention à d'autres diamètres nominaux du palier de rotation et à d'autres épaisseurs de ses bagues.

## Revendications

1. Palier de rotation (B) destiné à être placé entre un organe rotatif (40) d'un moteur et un arbre primaire (50) d'une boîte de vitesses, le palier de rotation étant constitué d'au moins deux bagues (10, 20, 30, 35) cylindriques, d'axe X, étant en contact entre elles parmi lesquelles
- une bague intérieure (10) adaptée à être montée serrée ou glissante sur l'arbre primaire.
- une bague extérieure (20) adaptée à être montée serrée dans l'organe rotatif,
le palier de rotation (B) comprenant au moins une troisième bague (30, 35) logée au moins en partie dans la bague extérieure, l'au moins une troisième bague (30, 35) formant une bague de guidage (35) configurée pour l'entrée de l'arbre primaire dans le palier de rotation,
lesdites bagues (10, 20, 30, 35) cylindriques étant configurées pour aligner l'arbre primaire avec l'organe rotatif,
au moyen d'au moins une bague (10, 20, 30, 35) configurée pour réaliser un degré de liberté et d'au moins une bague (10, 20, 30, 35) réalisée en un matériau synthétique ou composite favorisant le glissement.

2. Palier de rotation (B) selon la revendication 1, dans lequel une bague (10, 30, 35) de préférence celle intérieure (10), est à la fois en matière synthétique ou composite et configurée pour réaliser au moins un degré de liberté avec une autre bague ou avec l'arbre primaire.

3. Palier de rotation (B) selon la revendication 1 ou 2, dans lequel il comprend un nombre de bagues (10, 20, 30, 35) cylindriques inférieur ou égal à quatre.

4. Palier de rotation (B) selon l'une des revendications précédentes, dans lequel au moins une des bagues cylindriques de préférence celle intérieure (10), est auto-lubrifiée, et dans lequel la bague intérieure (10) est en matière synthétique ou en composite, de préférence en plastique.

5. Palier de rotation (B) selon l'une des revendications précédentes, dans lequel lesdites bagues (10, 20, 30, 35) cylindriques sont toutes différentes de par au moins : le matériau, la densité ou dureté, la forme, l'épaisseur (e1, e2, e3) et la longueur (l1, l2, l3).

6. Palier de rotation (B) selon l'une des revendications précédentes, dans lequel la bague intérieure (10) forme une bague lisse dite coussinet montée coulissant sur l'arbre primaire, le diamètre extérieur (D1', D1") de la bague intérieure (10) étant de préférence inférieure au diamètre intérieur (D2') de la bague extérieure (20).

7. Palier de rotation (B) selon l'une des revendications 1 à 6, dans lequel :
- la bague intérieure (10) forme une bague de pivotement, comprenant une surface de contact bombée (110, 110') interne ou externe qui est montée avec l'arbre primaire ou avec la bague extérieure, ou
- la bague intérieure (10) forme une bague sphéroïdale dite rotule, comprenant une surface de contact (120) sphérique externe qui est montée avec la bague extérieure.

8. Palier de rotation (B) selon l'une des revendications précédentes, dans lequel la bague extérieure (20) est définie de par au moins:
- une forme configurée pour se loger dans l'organe rotatif et être au contact de celui-ci ;
- un matériau en tôle métallique, d'une dureté supérieure à celle de la bague intérieure ;
- un volume intérieur à l'intérieur duquel s'étend au moins une autre bague (10, 30, 35), de préférence l'ensemble des autres bagues du palier de rotation ; et/ou
- des moyens de blocage axial ou rotatif destinés à lier au moins une autre bague (10), et de préférence l'ensemble des autres bagues, à la bague extérieure (20), les moyens de blocage étant par exemple réalisés par une face terminale (23) d'appui contre laquelle un bord (13) de la bague intérieure vient en appui.

9. Palier de rotation (B) selon l'une des revendications 1 à 8, dans lequel la bague extérieure (20) est définie de par au moins :
- une forme de cage, de préférence flexible, entourant la bague intérieure,
- un bossage central (210), de préférence flexible, sur lequel la bague intérieure est en appui,
- des moyens de serrage (25) destinés à être montés sur les tranches de la bague intérieure, notamment au sein d'encoches (15) externes ménagées sur les tranches de la bague intérieure.

10. Palier de rotation (B) selon l'une des revendications 1 à 9, dans lequel l'au moins une troisième bague est en matériau synthétique ou composite,
de préférence réalisée(s) par moulage, en particulier en plastique ou en caoutchouc, préférentiellement dans une forme monobloc ou bi-bloc.

11. Palier de rotation (B) selon l'une des revendications 1 à 10, dans lequel l'au moins une troisième bague forme une bague d'amortissement (30) configurée pour amortir les efforts radiaux entre les bagues intérieure et extérieure, réalisée en polymère en particulier en caoutchouc synthétique ou composite.

12. Palier de rotation (B) selon l'une des revendications précédentes, dans lequel le palier de rotation est constitué d'une à trois bagues moulées, à titre d'exemple au moins l'une desdites bagues moulées étant réalisée par injection dans la bague extérieure (20), le volume intérieur de ladite a bague extérieure (20) servant alors de moule.

## Patentansprüche

1. Drehlager (B), das dazu bestimmt ist, zwischen einem rotierenden Organ (40) eines Motors und einer Primärwelle (50) eines Getriebes platziert zu werden, wobei das Drehlager aus mindestens zwei zylindrischen Ringen (10, 20, 30, 35) mit einer Achse X besteht, die miteinander in Kontakt stehen, darunter
- ein Innenring (10), der dafür ausgelegt ist, fest oder gleitend auf der Primärwelle montiert zu werden.
- ein Außenring (20), der dafür ausgelegt ist, fest im rotierenden Organ montiert zu werden,
wobei das Drehlager (B) mindestens einen dritten Ring (30, 35) umfasst, der zumindest teilweise im Außenring untergebracht ist, wobei der mindestens eine dritte Ring (30, 35) einen Führungsring (35) bildet, der für den Eintritt der Primärwelle in das Drehlager konfiguriert ist, - aus Polymer, insbesondere aus Kunststoff hergestellt, - wobei die zylindrischen Ringe (10, 20, 30, 35) dafür konfiguriert sind, die Primärwelle mit dem rotierenden Organ auszurichten, mittels mindestens eines Rings (10, 20, 30, 35), der dafür konfiguriert ist, einen Freiheitsgrad zu realisieren, und mindestens eines Rings (10, 20, 30, 35), der aus einem synthetischen oder Verbundmaterial hergestellt ist, das das Gleiten begünstigt.

2. Drehlager (B) nach Anspruch 1, bei dem ein Ring (10, 30, 35), vorzugsweise der innere (10), sowohl aus synthetischem oder Verbundmaterial besteht als auch dafür konfiguriert ist, mindestens einen Freiheitsgrad mit einem anderen Ring oder mit der Primärwelle zu realisieren.

3. Drehlager (B) nach Anspruch 1 oder 2, bei dem es eine Anzahl von zylindrischen Ringen (10, 20, 30, 35) umfasst, die kleiner oder gleich vier ist.

4. Drehlager (B) nach einem der vorhergehenden Ansprüche, bei dem mindestens einer der zylindrischen Ringe, vorzugsweise der innere (10), selbstschmierend ist, und bei dem der Innenring (10) aus synthetischem Material oder aus Verbundmaterial, vorzugsweise aus Kunststoff, besteht.

5. Drehlager (B) nach einem der vorhergehenden Ansprüche, bei dem sich die zylindrischen Ringe (10, 20, 30, 35) alle in mindestens einem der folgenden Merkmale unterscheiden: Material, Dichte oder Härte, Form, Dicke (e1, e2, e3) und Länge (11, 12, 13).

6. Drehlager (B) nach einem der vorhergehenden Ansprüche, bei dem der Innenring (10) einen glatten Ring, sogenanntes Gleitlager, bildet, der gleitend auf der Primärwelle montiert ist, wobei der Außendurchmesser (D1', D1") des Innenrings (10) vorzugsweise kleiner als der Innendurchmesser (D2') des Außenrings (20) ist.

7. Drehlager (B) nach einem der Ansprüche 1 bis 6, bei dem: - der Innenring (10) einen Schwenkring bildet, der eine gewölbte interne oder externe Kontaktfläche (110, 110') umfasst, die mit der Primärwelle oder mit dem Außenring montiert ist, oder
- der Innenring (10) einen sphäroidalen Ring, sogenanntes Kugelgelenk, bildet, der eine sphärische externe Kontaktfläche (120) umfasst, die mit dem Außenring montiert ist.

8. Drehlager (B) nach einem der vorhergehenden Ansprüche, bei dem der Außenring (20) durch mindestens eines der folgenden Merkmale definiert ist:
- eine Form, die dafür konfiguriert ist, sich in das rotierende Organ einzufügen und mit diesem in Kontakt zu sein;
- ein Material aus Metallblech mit einer höheren Härte als die des Innenrings;
- ein Innenvolumen, in dem sich mindestens ein anderer Ring (10, 30, 35), vorzugsweise alle anderen Ringe des Drehlagers, erstreckt; und/oder
- axiale oder rotative Blockiermittel, die dazu bestimmt sind, mindestens einen anderen Ring (10) und vorzugsweise alle anderen Ringe mit dem Außenring (20) zu verbinden, wobei die Blockiermittel beispielsweise durch eine Endfläche (23) realisiert werden, gegen die ein Rand (13) des Innenrings anliegt.

9. Drehlager (B) nach einem der Ansprüche 1 bis 8, bei dem der Außenring (20) durch mindestens eines der folgenden Merkmale definiert ist:
- eine Käfigform, vorzugsweise flexibel, die den Innenring umgibt,
- eine zentrale Erhebung (210), vorzugsweise flexibel, auf der der Innenring aufliegt,
- Klemmmittel (25), die dazu bestimmt sind, auf den Kanten des Innenrings montiert zu werden, insbesondere in externen Aussparungen (15), die auf den Kanten des Innenrings vorgesehen sind.

10. Drehlager (B) nach einem der Ansprüche 1 bis 9, bei dem der mindestens eine dritte Ring aus synthetischem oder Verbundmaterial besteht, vorzugsweise durch Formguss hergestellt, insbesondere aus Kunststoff oder Gummi, vorzugsweise in einer einteiligen oder zweiteiligen Form.

11. Drehlager (B) nach einem der Ansprüche 1 bis 10, bei dem der mindestens eine dritte Ring einen Dämpfungsring (30) bildet, der dafür konfiguriert ist, die radialen Kräfte zwischen den Innen- und Außenringen zu dämpfen, hergestellt aus Polymer, insbesondere aus synthetischem Gummi oder Verbundmaterial.

12. Drehlager (B) nach einem der vorhergehenden Ansprüche, bei dem das Drehlager aus ein bis drei geformten Ringen besteht, wobei beispielsweise mindestens einer der geformten Ringe durch Einspritzen in den Außenring (20) hergestellt wird, wobei das Innenvolumen des Außenrings (20) dann als Form dient.

## Claims

1. Rotation bearing (B) intended to be placed between a rotating member (40) of an engine and a primary shaft (50) of a gearbox, the rotation bearing consisting of at least two cylindrical rings (10, 20, 30, 35), with axis X, being in contact with each other among which
- an inner ring (10) adapted to be mounted tight or sliding on the primary shaft.
- an outer ring (20) adapted to be mounted tight in the rotating member,
the rotation bearing (B) comprising at least a third ring (30, 35) housed at least partly in the outer ring, the at least one third ring (30, 35) forming a guide ring (35) configured for the entry of the primary shaft into the rotation bearing, - made of polymer particularly synthetic plastic, - said cylindrical rings (10, 20, 30, 35) being configured to align the primary shaft with the rotating member, by means of at least one ring (10, 20, 30, 35) configured to provide a degree of freedom and at least one ring (10, 20, 30, 35) made of a synthetic or composite material promoting sliding.

2. Rotation bearing (B) according to claim 1, wherein a ring (10, 30, 35) preferably the inner one (10), is both made of synthetic or composite material and configured to provide at least one degree of freedom with another ring or with the primary shaft.

3. Rotation bearing (B) according to claim 1 or 2, wherein it comprises a number of cylindrical rings (10, 20, 30, 35) less than or equal to four.

4. Rotation bearing (B) according to any one of the preceding claims, wherein at least one of the cylindrical rings preferably the inner one (10), is self-lubricated, and wherein the inner ring (10) is made of synthetic material or composite, preferably plastic.

5. Rotation bearing (B) according to any one of the preceding claims, wherein said cylindrical rings (10, 20, 30, 35) are all different in at least: material, density or hardness, shape, thickness (e1, e2, e3) and length (11, 12, 13).

6. Rotation bearing (B) according to any one of the preceding claims, wherein the inner ring (10) forms a smooth ring called a bushing mounted sliding on the primary shaft, the outer diameter (D1', D1") of the inner ring (10) being preferably less than the inner diameter (D2') of the outer ring (20).

7. Rotation bearing (B) according to any one of claims 1 to 6, wherein: - the inner ring (10) forms a pivoting ring, comprising a curved contact surface (110, 110') internal or external which is mounted with the primary shaft or with the outer ring, or
- the inner ring (10) forms a spheroidal ring called a ball joint, comprising an external spherical contact surface (120) which is mounted with the outer ring.

8. Rotation bearing (B) according to any one of the preceding claims, wherein the outer ring (20) is defined by at least:
- a shape configured to fit into the rotating member and be in contact with it;
- a material of metal sheet, of a hardness greater than that of the inner ring;
- an interior volume within which extends at least one other ring (10, 30, 35), preferably all the other rings of the rotation bearing; and/or
- axial or rotational blocking means intended to link at least one other ring (10), and preferably all the other rings, to the outer ring (20), the blocking means being for example made by a terminal face (23) of support against which an edge (13) of the inner ring comes to rest.

9. Rotation bearing (B) according to any one of claims 1 to 8, wherein the outer ring (20) is defined by at least:
- a cage shape, preferably flexible, surrounding the inner ring,
- a central boss (210), preferably flexible, on which the inner ring rests,
- clamping means (25) intended to be mounted on the edges of the inner ring, particularly within external notches (15) provided on the edges of the inner ring.

10. Rotation bearing (B) according to any one of claims 1 to 9, wherein the at least one third ring is made of synthetic or composite material, preferably made by molding, particularly plastic or rubber, preferentially in a monoblock or bi-block form.

11. Rotation bearing (B) according to any one of claims 1 to 10, wherein the at least one third ring forms a damping ring (30) configured to dampen radial forces between the inner and outer rings, made of polymer particularly synthetic rubber or composite.

12. Rotation bearing (B) according to any one of the preceding claims, wherein the rotation bearing consists of one to three molded rings, for example at least one of said molded rings being made by injection into the outer ring (20), the interior volume of said outer ring (20) then serving as a mold.
